# EUROPÄISCHE PATENTSCHRIFT

(11) **EP 3 158 223 B1**
(45) Veröffentlichungstag und Bekanntmachung des Hinweises auf die Patenterteilung: **22.08.2018**
(21) Anmeldenummer: 15736390.4
(22) Anmeldetag: 12.05.2015
(51) Int. Cl.: F16F 15/14

(54) **FLIEHKRAFTPENDELEINRICHTUNG**
CENTRIFUGAL PENDULUM DEVICE
SYSTÈME DE PENDULE CENTRIFUGE

(30) Priorität: 18.06.2014 DE 102014211740
(43) Veröffentlichungstag der Anmeldung: 26.04.2017
(73) Patentinhaber: Schaeffler Technologies AG & Co. KG, 91074 Herzogenaurach (DE)
(72) Erfinder: RUSCH, Alain, 67760 Gambsheim (FR); DUSHEV, Alexander, 77883 Ottenhöfen (DE)
(86) Internationale Anmeldenummer: PCT/DE2015/200311
(87) Internationale Veröffentlichungsnummer: WO 2015/192839

(56) Entgegenhaltungen:
- DE-A1-102011 086 436
- DE-A1-102012 219 737
- US-A1- 2012 222 515

## Beschreibung

Die Erfindung betrifft eine Fliehkraftpendeleinrichtung, insbesondere für einen Antriebsstrang eines brennkraftmaschinengetriebenen Kraftfahrzeugs, die Fliehkraftpendeleinrichtung aufweisend eine Drehachse, ein um die Drehachse drehbares Pendelmasseträgerteil mit einem ersten Flanschabschnitt und einem von dem ersten Flanschabschnitt axial beabstandet und zu dem ersten Flanschabschnitt parallel angeordneten zweiten Flanschabschnitt, wenigstens eine an dem Pendelmasseträgerteil zwischen dem ersten Flanschabschnitt und dem zweiten Flanschabschnitt angeordnete, unter Fliehkrafteinwirkung entlang einer Pendelbahn verlagerbar angeordnete Pendelmasse und eine Anschlagdämpfereinrichtung mit wenigstens einem Anschlagabschnitt für die wenigstens eine Pendelmasse und wenigstens einem Fixierabschnitt zum Fixieren der Anschlagdämpfereinrichtung an dem Pendelmasseträgerteil.

Aus der DE 10 2008 059 297 A1 ist eine Kupplungseinrichtung bekannt mit einem Kupplungsdeckel, an dem ein Fliehkraftpendel angebracht ist, das mehrere Pendelmassen umfasst, bei der das Fliehkraftpendel mehrere Fliehkraftpendeleinrichtungen mit jeweils einer Pendelmassenträgereinrichtung umfasst, die an dem Kupplungsdeckel befestigt ist. Die Pendelmassenträgereinrichtungen umfassen jeweils zwei im Wesentlichen kreisbogenförmige Führungselemente, zwischen denen mindestens eine Pendelmasse bewegbar angeordnet ist. An den Pendelmassen sind flächige Pufferelemente angebracht.

Aus der DE 10 2009 042 825 A1 ist eine Drehmomentübertragungseinrichtung bekannt in einem Antriebsstrang eines Kraftfahrzeuges mit einem Drehschwingungsdämpfer mit zwei aufeinander entgegen der Wirkung zumindest eines Energiespeichers begrenzt verdrehbar gelagerten Dämpferteilen und einem Fliehkraftpendel mit einem der Dämpferteile drehschlüssig verbundenen angeordneten Trägerteil, das mehrere über den Umfang verteilte und begrenzt zu dieser mittels Wälzkörpern gegenüber dem Trägerteil verschwenkbare Pendelmassen aufnimmt, bei dem die Pendelmassen zumindest nach radial außen gekapselt sind. In dem Trägerteil sind über den Umfang verteilte Anschlagpuffer für in Umfangsrichtung weisende Stirnseiten der Pendelmassen vorgesehen. Im Bereich von Anschlagflächen der Stirnseiten von Deckblechen ist an den Anschlagpuffern eine Pufferscheibe beispielsweise aus Kunststoff oder Gummi vorgesehen. Auch das Dokument DE 10 2012 219737 A1 zeigt eine Fliehkraftpendeleinrichtung gemäß dem Oberbegriff des Anspruchs 1.

Der Erfindung liegt die Aufgabe zugrunde, eine eingangs genannte Fliehkraftpendeleinrichtung baulich und/oder funktional zu verbessern. Insbesondere soll eine unerwünschte Verformung der Anschlagdämpfereinrichtung verhindert werden. Insbesondere soll eine Fixierung der Anschlagdämpfereinrichtung auch unter erhöhtem Fliehkrafteinfluss gewährleistet werden. Insbesondere soll eine unbeeinträchtigte Verlagerungsfähigkeit der wenigstens einen Pendelmasse gewährleistet werden. Insbesondere soll eine unbeeinträchtigte Funktionsfähigkeit der Fliehkraftpendeleinrichtung gewährleistet werden.
Die Aufgabe wird gelöst mit einer Fliehkraftpendeleinrichtung, insbesondere für einen Antriebsstrang eines brennkraftmaschinengetriebenen Kraftfahrzeugs, die Fliehkraftpendeleinrichtung aufweisend eine Drehachse, ein um die Drehachse drehbares Pendelmasseträgerteil mit einem ersten Flanschabschnitt und einem von dem ersten Flanschabschnitt axial beabstandet und zu dem ersten Flanschabschnitt parallel angeordneten zweiten Flanschabschnitt, wenigstens eine an dem Pendelmasseträgerteil zwischen dem ersten Flanschabschnitt und dem zweiten Flanschabschnitt angeordnete, unter Fliehkrafteinwirkung entlang einer Pendelbahn verlagerbar angeordnete Pendelmasse und eine Anschlagdämpfereinrichtung mit wenigstens einem Anschlagabschnitt für die wenigstens eine Pendelmasse und wenigstens einem Fixierabschnitt zum Fixieren der Anschlagdämpfereinrichtung an dem Pendelmasseträgerteil, wobei der erste Flanschabschnitt und der zweite Flanschabschnitt zum Fixieren der Anschlagdämpfereinrichtung jeweils asymmetrische Ausnehmungen aufweisen.
Die Fliehkraftpendeleinrichtung kann dazu dienen, Drehschwingungen zu tilgen. Die Fliehkraftpendeleinrichtung kann zur Anordnung an einem Drehschwingungsdämpfer, insbesondere an einem Eingangsteil oder einem Ausgangsteil eines Drehschwingungsdämpfers, dienen. Die Fliehkraftpendeleinrichtung kann zur Anordnung an einer Reibungskupplungseinrichtung, insbesondere an einem Eingangsteil oder einem Ausgangsteil einer Reibungskupplungseinrichtung, dienen. Die Fliehkraftpendeleinrichtung kann zur Anordnung an einem hydrodynamischen Drehmomentwandler dienen. Die Fliehkraftpendeleinrichtung kann zur Anordnung an einem Nebenaggregatantrieb dienen. Die Fliehkraftpendeleinrichtung kann zur Anordnung an einer Kurbelwelle einer Brennkraftmaschine dienen.

Der erste Flanschabschnitt und der zweite Flanschabschnitt können jeweils eine scheibenartige Form aufweisen. Der erste Flanschabschnitt und der zweite Flanschabschnitt können einen Aufnahmeraum für die wenigstens ein Pendelmasse begrenzen. Der erste Flanschabschnitt und der zweite Flanschabschnitt können miteinander fest verbunden sein. Der erste Flanschabschnitt und der zweite Flanschabschnitt können miteinander vernietet sein. Der erste Flanschabschnitt und der zweite Flanschabschnitt können voneinander mithilfe von Abstandsbolzen beabstandet sein.

Die wenigstens eine Pendelmasse kann zur Drehachse exzentrisch angeordnet sein. Die wenigstens eine Pendelmasse kann zwischen einer ersten Endlage und einer zweiten Endlage verlagerbar sein. Die wenigstens eine Pendelmasse kann eine bogenartige Form aufweisen. Die wenigstens eine Pendelmasse kann mit dem Pendelmasseträgerteil bifilar verbunden sein. Die wenigstens eine Pendelmasse kann an dem Pendelmasseträgerteil mithilfe von Pendelrollen gelagert sein. Das Pendelmasseträgerteil kann Aufnahmen zur Aufnahme der Pendelrollen aufweisen. Die wenigstens eine Pendelmasse kann Aufnahmen zur Aufnahme der Pendelrollen aufweisen. Die Aufnahmen der wenigstens einen Pendelmasse und/oder des Pendelmasseträgerteils können jeweils eine nierenartige Form aufweisen. Die wenigstens eine Pendelmasse kann einteilig sein. Die Fliehkraftpendeleinrichtung kann mehrere, beispielsweise vier, Pendelmassen aufweisen.

Die Anschlagdämpfereinrichtung kann dazu dienen, ein Anschlagen der wenigstens einen Pendelmasse an dem Pendelmasseträgerteil zu dämpfen. Die Anschlagdämpfereinrichtung kann dazu dienen, ein Anschlagen der wenigstens einen Pendelmasse in den Endlagen zu verhindern. Die Anschlagdämpfereinrichtung kann dazu dienen, ein Anschlagen der wenigstens einen Pendelmasse zu verhindern, wenn eine Fliehkrafteinwirkung einen vorbestimmten Wert unterschreitet, sodass ein Schwerkrafteinfluss auf die wenigstens eine Pendelmasse überwiegt. Die Anschlagdämpfereinrichtung kann radial innerhalb der wenigstens einen Pendelmasse angeordnet sein. Die Anschlagdämpfereinrichtung kann ein elastisches Material aufweisen oder aus einem elastischen Material bestehen. Die Anschlagdämpfereinrichtung kann Gummi aufweisen oder aus Gummi bestehen. Die Anschlagdämpfereinrichtung kann einen Kunststoff aufweisen oder aus einem Kunststoff bestehen.

Der erste Flanschabschnitt kann erste asymmetrische Ausnehmungen aufweisen. Der zweite Flanschabschnitt kann zweite asymmetrische Ausnehmungen aufweisen. Der erste Flanschabschnitt und der zweite Flanschabschnitt können jeweils mehrere, insbesondere acht bis sechszehn, insbesondere zehn bis vierzehn, insbesondere zwölf, Ausnehmungen aufweisen. Die Ausnehmungen können jeweils zu einer Durchmessergeraden des Flanschabschnitts asymmetrisch sein. Die Ausnehmungen können jeweils in Umfangsrichtung gleichmäßig verteilt angeordnet sein. Die Ausnehmungen eines Flanschabschnitts können jeweils gleichförmig sein. Die Ausnehmungen eines Flanschabschnitts können jeweils unterschiedlich geformt sein.

Die Ausnehmungen des ersten Flanschabschnitts und die Ausnehmungen des zweiten Flanschabschnitts können axial betrachtet zumindest abschnittsweise überdeckungsfrei angeordnet sein. Die Ausnehmungen des ersten Flanschabschnitts und die Ausnehmungen des zweiten Flanschabschnitts können sich axial betrachtet abschnittsweise überdecken.

Der erste Flanschabschnitt und der zweite Flanschabschnitt können als Gleichteile hergestellt sein. Ein Flanschabschnitt kann zu dem anderen Flanschabschnitt umgedreht angeordnet sein.

Der wenigstens eine Anschlagabschnitt kann umlaufend geschlossen ausgeführt sein. Der wenigstens eine Anschlagabschnitt kann ringförmig ausgeführt sein. Der wenigstens eine Anschlagabschnitt kann segmentartig ausgeführt sein. Der wenigstens eine Anschlagabschnitt kann bogenförmig ausgeführt sein.

Der wenigstens eine Fixierabschnitt kann erste Axialfortsätze, die in den Ausnehmungen des ersten Flanschabschnitts aufgenommen sind, und zweite Axialfortsätze, die in den Ausnehmungen des zweiten Flanschabschnitts aufgenommen sind, aufweisen. Die ersten Axialfortsätze und die zweiten Axialfortsätze können in unterschiedlichen axialen Ebenen angeordnet sein. Es können jeweils wenigstens ein erster Axialfortsatz und wenigstens ein zweiter Axialfortsatz miteinander verbunden sein. Die ersten Axialfortsätze und die Ausnehmungen des ersten Flanschabschnitts können einander geometrisch komplementär entsprechen. Die zweiten Axialfortsätze und die Ausnehmungen des zweiten Flanschabschnitts können einander geometrisch komplementär entsprechen.

Der wenigstens eine Fixierabschnitt kann wenigstens einen Schlaufenabschnitt aufweisen. Der wenigstens eine Schlaufenabschnitt kann wenigstens einen ersten Axialfortsatz und wenigstens einen zweiten Axialfortsatz aufweisen. Der wenigstens eine Schlaufenabschnitt kann sich ausgehend von dem Anschlagabschnitt nach radial innen erstrecken.

Der wenigstens eine Fixierabschnitt kann umlaufend geschlossen ausgeführt sein. Der wenigstens eine Fixierabschnitt kann ringförmig ausgeführt sein. Der wenigstens eine Fixierabschnitt kann segmentartig ausgeführt sein. Der wenigstens eine Fixierabschnitt kann einen einzigen Schlaufenabschnitt aufweisen. Der wenigstens eine Fixierabschnitt kann mehrere, insbesondere zwei, Schlaufenabschnitte aufweisen.

Der wenigstens eine Fixierabschnitt kann einen folienartigen Flanschabschnitt aufweisen. Der Flanschabschnitt kann radial innerhalb des wenigstens einen Schlaufenabschnitts angeordnet sein.

Die Anschlagdämpfereinrichtung kann zwischen dem ersten Flanschabschnitt und dem zweiten Flanschabschnitt formschlüssig fixiert sein. Die Anschlagdämpfereinrichtung kann zwischen dem ersten Flanschabschnitt und dem zweiten Flanschabschnitt axial zumindest annähernd spannungsfrei fixiert sein.

Die Anschlagdämpfereinrichtung kann einteilig ausgeführt sein. Die Anschlagdämpfereinrichtung kann mehrteilig, insbesondere vierteilig oder sechsteilig, ausgeführt sein.

Zusammenfassend und mit anderen Worten dargestellt ergibt sich somit durch die Erfindung unter anderem ein Fliehkraftpendel mit unter Fliehkraft formstabilem Dämpferelement. Es können ein Träger mit unsymmetrischen Einhängeöffnungen und ein Dämpferelement, das sich zwischen Flansche montieren lässt, kombiniert werden. Die Flansche können mithilfe von Abstandsbolzen miteinander vernietet sein, sodass im Bereich der Einhängeöffnungen ein Formschluss entsteht, der ein Umstülpen des Dämpferelements, das aus Gummi bestehen kann, nicht zulässt. Die Komponenten können zur Montage einfach aufeinander gelegt und dann vernietet werden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Bei der erfindungsgemäßen Fliehkraftpendeleinrichtung ist eine unerwünschte Verformung der Anschlagdämpfereinrichtung verhindert. Eine Fixierung der Anschlagdämpfereinrichtung ist auch unter erhöhtem Fliehkrafteinfluss gewährleistet. Eine unbeeinträchtigte Verlagerungsfähigkeit der wenigstens einen Pendelmasse ist gewährleistet. Eine unbeeinträchtigte Funktionsfähigkeit der Fliehkraftpendeleinrichtung ist gewährleistet.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Fliehkraftpendeleinrichtung mit einem Pendelmasseträgerteil, Pendelmassen und einem Anschlagdämpfer von innen,
- Fig. 2: zwei Flanschabschnitte eines Pendelmasseträgerteils und einen Anschlagdämpfer in Explosionsdarstellung,
- Fig. 3: einen einteiligen Anschlagdämpfer mit einem ringförmigen Anschlagabschnitt,
- Fig. 4: eine Fliehkraftpendeleinrichtung mit einem Pendelmasseträgerteil, Pendelmassen und einem Anschlagdämpfer in Draufsicht und in Schnittansicht entlang der Linie E-E,
- Fig. 5: einen einteiligen Anschlagdämpfer mit einem segmentierten Anschlagabschnitt,
- Fig. 6: einen sechsteiligen Anschlagdämpfer,
- Fig. 7: einen vierteiligen Anschlagdämpfer und
- Fig. 8: einen einteiligen Anschlagdämpfer mit einem flanschartigen Fixierabschnitt.

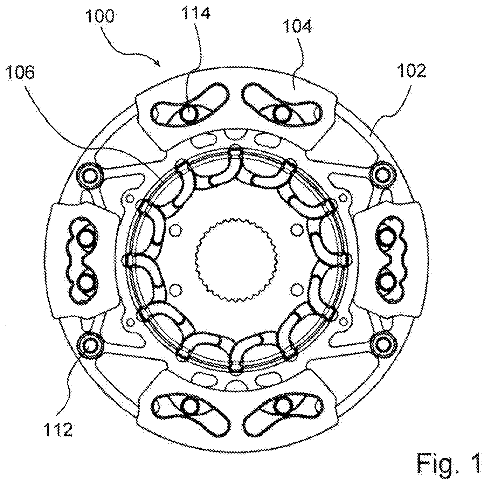

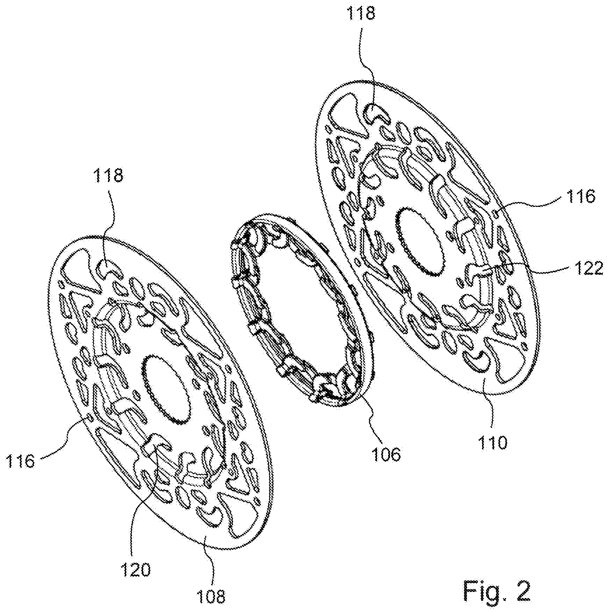

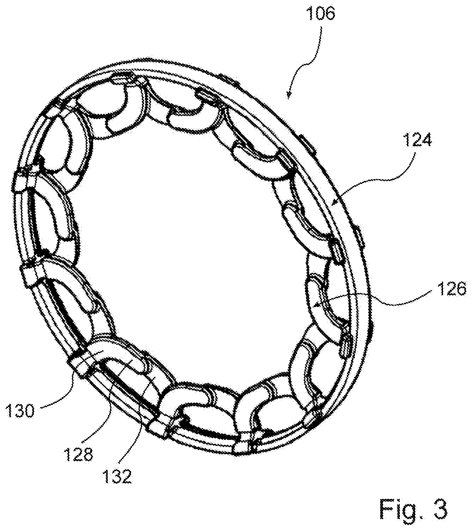

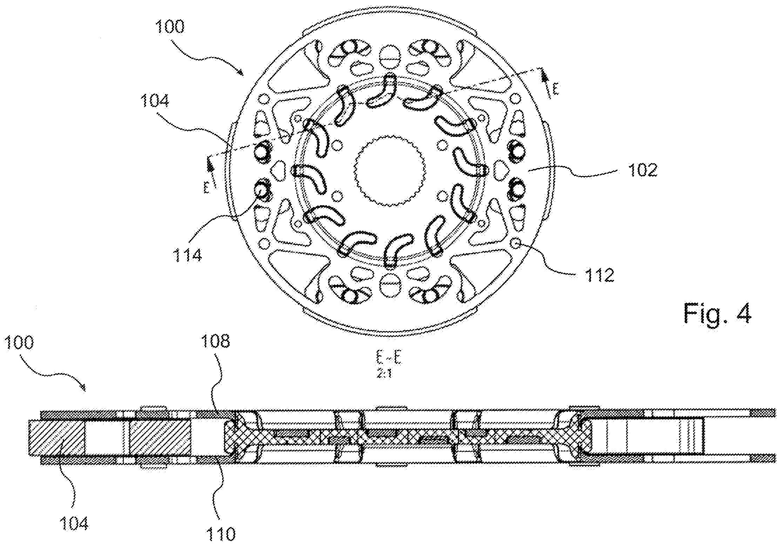

Fig. 1 zeigt eine Fliehkraftpendeleinrichtung 100 mit einem Pendelmasseträgerteil 102, Pendelmassen, wie 104, und einem Anschlagdämpfer 106 von innen. Das Pendelmasseträgerteil 102 weist zwei Flanschabschnitte 108, 110 auf. Fig. 2 zeigt die Flanschabschnitte 108, 110 des Pendelmasseträgerteils 102 und den Anschlagdämpfer 106 in Explosionsdarstellung. Fig. 3 zeigt den Anschlagdämpfer 106. Fig. 4 zeigt die Fliehkraftpendeleinrichtung 100 in Draufsicht und in Schnittansicht entlang der Linie E-E.

Die Fliehkraftpendeleinrichtung 100 weist eine Drehachse auf. Die Flanschabschnitte 108, 110 sind jeweils scheibenförmig ausgeführt und mithilfe von Abstandsbolzen, wie 112, axial voneinander beabstandet und zueinander parallel angeordnet. Die Pendelmassen 104 sind axial zwischen den Flanschabschnitten 108, 110 angeordnet. Die Pendelmassen 104 sind mithilfe von Pendelrollen, wie 114, an den Flanschabschnitten 108, 110 unter Fliehkrafteinwirkung entlang einer Pendelbahn zwischen zwei Endlagen verlagerbar angeordnet.

Der Anschlagdämpfer 106 besteht aus Gummi, ist radial innerhalb der Pendelmassen 104 angeordnet und dient dazu ein Anschlagen der Pendelmassen 104 an dem Pendelmasseträgerteil 102 zu dämpfen, wenn ein Fliehkrafteinfluss auf die Pendelmassen 104 einen vorbestimmten Wert unterschreitet, sodass ein Schwerkrafteinfluss überwiegt und die Pendelmassen 104 nach unten fallen, beispielsweise bei einem Start, Stopp, Auskuppeln oder Anhalten eines Fahrzeugs.

Die Flanschabschnitte 108, 110 weisen jeweils Ausnehmungen, wie 116, für die Abstandsbolzen 112 auf. Die Flanschabschnitte 108, 110 weisen jeweils Ausnehmungen, wie 118, für die Pendelrollen 114 auf. Der Flanschabschnitt 108 weist Ausnehmungen, wie 120, zum Fixieren des Anschlagdämpfers 106 auf. Der Flanschabschnitt 110 weist Ausnehmungen, wie 122, zum Fixieren des Anschlagdämpfers 106 auf. Die Ausnehmungen 120, 122 sind jeweils bezüglich einer Durchmessergeraden des Flanschabschnitts 108, 110 asymmetrisch. Die Ausnehmungen 120, 122 weisen jeweils eine langlochartige Form auf. Die Ausnehmungen 120, 122 sind jeweils bogenförmig. Die Ausnehmungen 120, 122 eines Flanschabschnitts 108, 110 sind jeweils gleichsinnig gebogen. Die Flanschabschnitte 108, 110 sind als Gleichteile hergestellt. Ein Flanschabschnitt 108 ist zu dem anderen Flanschabschnitt 110 umgedreht angeordnet. Damit sind die Ausnehmungen 120 des Flanschabschnitts 108 und die Ausnehmungen 122 des Flanschabschnitts 110 zueinander umgekehrt gebogen angeordnet. Die Ausnehmungen 120 des Flanschabschnitts 108 und die Ausnehmungen 122 des Flanschabschnitts 110 sind zueinander derart angeordnet, dass sie sich axial betrachtet abschnittsweise überdecken und abschnittsweise nicht überdecken.

Der Anschlagdämpfer 106 ist einteilig mit einem ringförmigen Anschlagabschnitt 124 ausgeführt. Der Anschlagabschnitt 124 weist eine radiale Außenseite auf, an der die Pendelmassen 104 anschlagen können. Der Anschlagdämpfer 106 weist einen Fixierabschnitt 126 auf. Der Fixierabschnitt 126 erstreckt sich ausgehend von dem Anschlagabschnitt 124 nach radial innen und weist bogenförmige Schlaufen, wie 128, auf. Die Schlaufen 128 sind jeweils mit ihren Enden an dem Anschlagabschnitt 124 angeordnet. Der Anschlagdämpfer 106 weist Axialfortsätze, wie 130, auf, die geometrisch komplementär den Ausnehmungen 120 des Flanschabschnitts 108 entsprechen. Der Anschlagdämpfer 106 weist Axialfortsätze, wie 132, auf, die geometrisch komplementär den Ausnehmungen 122 des Flanschabschnitts 110 entsprechen. Die Schlaufen 128 weisen jeweils einen Axialfortsatz 130 und einen Axialfortsatz 132 auf. Die Axialfortsätze 130, 132 sind zueinander derart versetzt angeordnet, dass sie sich axial betrachtet abschnittsweise überdecken und abschnittsweise nicht überdecken. Die Axialfortsätze 130, 132 sind in unterschiedlichen axialen Ebenen angeordnet. Die Axialfortsätze 130 erstrecken sich zu dem Flanschabschnitt 108 hin. Die Axialfortsätze 132 erstrecken sich zu dem Flanschabschnitt 110 hin.

Zur Montage der Fliehkraftpendeleinrichtung 100 werden zunächst die Pendelmassen 104 mit den Pendelrollen 114, der Anschlagdämpfer 106 und die Abstandsbolzen 112 zwischen die Flanschabschnitte 108, 110 eingelegt und die Flanschabschnitte 108, 110 nachfolgend miteinander vernietet.

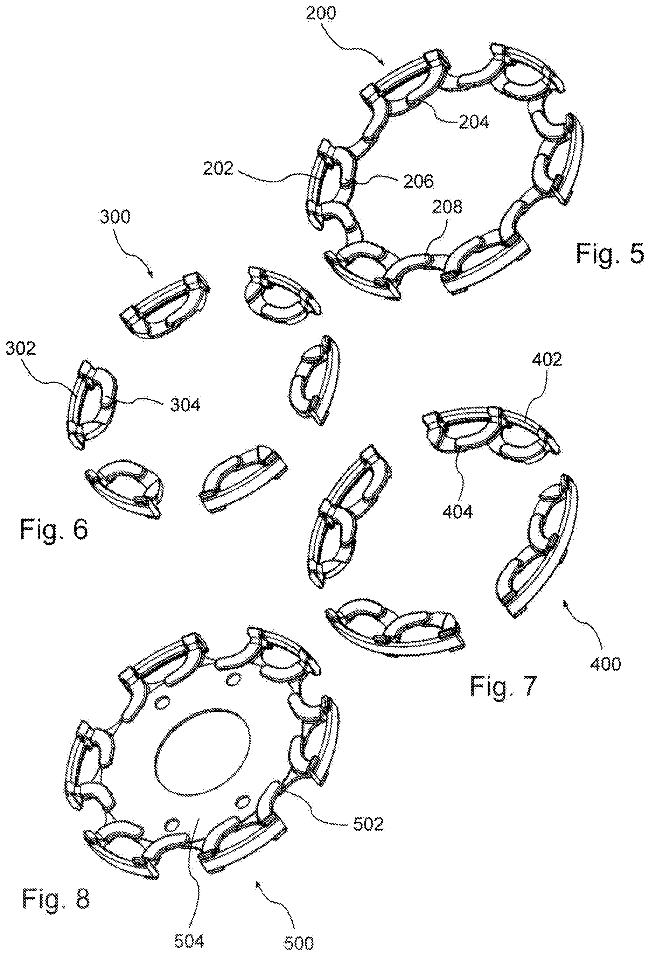

Fig. 5-8 zeigen Varianten eines Anschlagdämpfers, wie Anschlagdämpfer 106 gemäß Fig. 1-4. Fig. 5 zeigt einen einteiligen Anschlagdämpfer 200 mit einem Anschlagabschnitt, der mehrere, vorliegend sechs, Segmente, wie 202, aufweist. Der Fixierabschnitt 204 ist umlaufend geschlossen ausgeführt. Die Segmente 202 sind jeweils von einer der bogenförmigen Schlaufen, wie 206, getragen. Die die Segmente 202 tagenden Schlaufen 206 sind jeweils durch nicht segmenttragende Schlaufen, wie 208, miteinander verbunden. Fig. 6 zeigt einen sechsteiligen Anschlagdämpfer 300. Der Anschlagabschnitt des Anschlagdämpfers 300 weist sechs Segmente, wie 302, auf. Jedes der Segmente 302 weist eine bogenförmige Schlaufe, wie 304, zum Fixieren des Anschlagdämpfers 300 an einem Pendelmasseträgerteil auf. Fig. 7 zeigt einen vierteiligen Anschlagdämpfer 400. Der Anschlagabschnitt des Anschlagdämpfers 400 weist vier Segmente, wie 402, auf. Jedes der Segmente 402 weist zwei bogenförmige Schlaufen, wie 404, zum Fixieren des Anschlagdämpfers 400 an einem Pendelmasseträgerteil auf. Fig. 8 zeigt einen einteiligen Anschlagdämpfer 500 mit einem flanschartigen Fixierabschnitt. Die Schlaufen, wie 502, sind radial innenseitig mit einem Flanschabschnitt 504 verbunden.

### Bezugszeichenliste

- 100: Fliehkraftpendeleinrichtung
- 102: Pendelmasseträgerteil
- 104: Pendelmasse
- 106: Anschlagdämpfer
- 108: Flanschabschnitt
- 110: Flanschabschnitt
- 112: Abstandsbolzen
- 114: Pendelrolle
- 116: Ausnehmung
- 118: Ausnehmung
- 120: Ausnehmung
- 122: Ausnehmung
- 124: Anschlagabschnitt
- 126: Fixierabschnitt
- 128: Schlaufe
- 130: Axialfortsatz
- 132: Axialfortsatz

- 200: Anschlagdämpfer
- 202: Segment
- 204: Fixierabschnitt
- 206: Schlaufe
- 208: Schlaufe

- 300: Anschlagdämpfer
- 302: Segment
- 304: Schlaufe

- 400: Anschlagdämpfer
- 402: Segment
- 404: Schlaufe

- 500: Anschlagdämpfer
- 502: Schlaufe
- 504: Flanschabschnitt

## Patentansprüche

1. Fliehkraftpendeleinrichtung (100), insbesondere für einen Antriebsstrang eines brennkraftmaschinengetriebenen Kraftfahrzeugs, die Fliehkraftpendeleinrichtung (100) aufweisend eine Drehachse, ein um die Drehachse drehbares Pendelmasseträgerteil (102) mit einem ersten Flanschabschnitt (108) und einem von dem ersten Flanschabschnitt (108) axial beabstandet und zu dem ersten Flanschabschnitt (108) parallel angeordneten zweiten Flanschabschnitt (110), wenigstens eine an dem Pendelmasseträgerteil (102) zwischen dem ersten Flanschabschnitt (108) und dem zweiten Flanschabschnitt (110) angeordnete, unter Fliehkrafteinwirkung entlang einer Pendelbahn verlagerbar angeordnete Pendelmasse (104) und eine Anschlagdämpfereinrichtung (106, 200, 300, 400, 500) mit wenigstens einem Anschlagabschnitt (124) für die wenigstens eine Pendelmasse (104) und wenigstens einem Fixierabschnitt (126, 204) zum Fixieren der Anschlagdämpfereinrichtung (106, 200, 300, 400, 500) an dem Pendelmasseträgerteil (102), **dadurch gekennzeichnet, dass** der erste Flanschabschnitt (108) und der zweite Flanschabschnitt (110) zum Fixieren der Anschlagdämpfereinrichtung (106, 200, 300, 400, 500) jeweils asymmetrische Ausnehmungen (120, 122) aufweisen.

2. Fliehkraftpendeleinrichtung (100) nach Anspruch 1, **dadurch gekennzeichnet, dass** die Ausnehmungen (120) des ersten Flanschabschnitts (108) und die Ausnehmungen (122) des zweiten Flanschabschnitts (110) axial betrachtet zumindest abschnittsweise überdeckungsfrei angeordnet sind.

3. Fliehkraftpendeleinrichtung (100) nach wenigstens einem der vorhergehenden Ansprüche, **dadurch gekennzeichnet, dass** sich die Ausnehmungen (120) des ersten Flanschabschnitts (108) und die Ausnehmungen (122) des zweiten Flanschabschnitts (110) axial betrachtet abschnittsweise überdecken.

4. Fliehkraftpendeleinrichtung (100) nach wenigstens einem der vorhergehenden Ansprüche, **dadurch gekennzeichnet, dass** der erste Flanschabschnitt (108) und der zweite Flanschabschnitt (110) als Gleichteile hergestellt sind.

5. Fliehkraftpendeleinrichtung (100) nach wenigstens einem der vorhergehenden Ansprüche, **dadurch gekennzeichnet, dass** der wenigstens eine Anschlagabschnitt (124) umlaufend geschlossen oder segmentartig ausgeführt ist.

6. Fliehkraftpendeleinrichtung (100) nach wenigstens einem der vorhergehenden Ansprüche, **dadurch gekennzeichnet, dass** der wenigstens eine Fixierabschnitt (126, 204) erste Axialfortsätze (130), die in den Ausnehmungen (120) des ersten Flanschabschnitts (108) aufgenommen sind, und zweite Axialfortsätze (132), die in den Ausnehmungen (122) des zweiten Flanschabschnitts (110) aufgenommen sind, aufweist.

7. Fliehkraftpendeleinrichtung (100) nach wenigstens einem der vorhergehenden Ansprüche, **dadurch gekennzeichnet, dass** der wenigstens eine Fixierabschnitt (126, 204) wenigstens einen Schlaufenabschnitt (128, 206, 208, 304, 404, 502) aufweist.

8. Fliehkraftpendeleinrichtung (100) nach wenigstens einem der vorhergehenden Ansprüche, **dadurch gekennzeichnet, dass** der wenigstens eine Fixierabschnitt (126, 204) umlaufend geschlossen oder segmentartig ausgeführt ist.

9. Fliehkraftpendeleinrichtung (100) nach wenigstens einem der vorhergehenden Ansprüche, **dadurch gekennzeichnet, dass** der wenigstens eine Fixierabschnitt (126, 204) einen folienartigen Flanschabschnitt (504) aufweist.

10. Fliehkraftpendeleinrichtung (100) nach wenigstens einem der vorhergehenden Ansprüche, **dadurch gekennzeichnet, dass** die Anschlagdämpfereinrichtung (106, 200, 300, 400, 500) zwischen dem ersten Flanschabschnitt (108) und dem zweiten Flanschabschnitt (110) formschlüssig und/oder axial zumindest annähernd spannungsfrei fixiert ist.

## Claims

1. Centrifugal force pendulum device (100), in particular for a drive train of a motor vehicle which is operated by internal combustion engine, the centrifugal force pendulum device (100) comprising a rotational axis, a pendulum mass carrier part (102) which can be rotated about the rotational axis and has a first flange section (108) and a second flange section (110) which is arranged spaced apart axially from the first flange section (108) and parallel to the first flange section (108), at least one pendulum mass (104) which is arranged on the pendulum mass carrier part (102) between the first flange section (108) and the second flange section (110) and is arranged such that it can be moved along a pendulum path under the action of centrifugal force, and a stop damper device (106, 200, 300, 400, 500) with at least one stop section (124) for the at least one pendulum mass (104) and at least one fixing section (126, 204) for fixing the stop damper device (106, 200, 300, 400, 500) on the pendulum mass carrier part (102), **characterized in that** the first flange section (108) and the second flange section (110) in each case have asymmetrical recesses (120, 122) for fixing the stop damper device (106, 200, 300, 400, 500).

2. Centrifugal force pendulum device (100) according to Claim 1, **characterized in that** the recesses (120) of the first flange section (108) and the recesses (122) of the second flange section (110) are arranged without overlaps at least in sections as viewed axially.

3. Centrifugal force pendulum device (100) according to at least one of the preceding claims, **characterized in that** the recesses (120) of the first flange section (108) and the recesses (122) of the second flange section (110) overlap in sections as viewed axially.

4. Centrifugal force pendulum device (100) according to at least one of the preceding claims, **characterized in that** the first flange section (108) and the second flange section (110) are produced as identical parts.

5. Centrifugal force pendulum device (100) according to at least one of the preceding claims, **characterized in that** the at least one stop section (124) is of circumferentially closed or segment-like configuration.

6. Centrifugal force pendulum device (100) according to at least one of the preceding claims, **characterized in that** the at least one fixing section (126, 204) comprises first axial projections (130) which are received in the recesses (120) of the first flange section (108) and second axial projections (132) which are received in the recesses (122) of the second flange section (110).

7. Centrifugal force pendulum device (100) according to at least one of the preceding claims, **characterized in that** the at least one fixing section (126, 204) comprises at least one loop section (128, 206, 208, 304, 404, 502).

8. Centrifugal force pendulum device (100) according to at least one of the preceding claims, **characterized in that** the at least one fixing section (126, 204) is of circumferentially closed or segment-like configuration.

9. Centrifugal force pendulum device (100) according to at least one of the preceding claims, **characterized in that** the at least one fixing section (126, 204) has a film-like flange section (504).

10. Centrifugal force pendulum device (100) according to at least one of the preceding claims, **characterized in that** the stop damper device (106, 200, 300, 400, 500) is fixed in a positively locking and/or axially at least approximately stress-free manner between the first flange section (108) and the second flange section (110).

## Revendications

1. Système de pendule centrifuge (100), en particulier pour une chaîne cinématique d'un véhicule automobile mû par un moteur à combustion interne, le système de pendule centrifuge (100) présentant un axe de rotation, une pièce de support de masse pendulaire (102) pouvant tourner autour de l'axe de rotation avec une première partie de bride (108) et une seconde partie de bride (110) axialement espacée de la première partie de bride (108) et disposée parallèlement à la première partie de bride (108), au moins une masse pendulaire (104) disposée sur la pièce de support de masse pendulaire (102) entre la première partie de bride (108) et la seconde partie de bride (110) et disposée de façon déplaçable le long d'un chemin de pendule sous l'effet de la force centrifuge et un système d'amortisseur à butée (106, 200, 300, 400, 500) avec au moins une partie de butée (124) pour ladite au moins une masse pendulaire (104) et une partie de fixation (126, 204) pour la fixation du système d'amortisseur à butée (106, 200, 300, 400, 500) à la pièce de support de masse pendulaire (102), **caractérisé en ce que** la première partie de bride (108) et la seconde partie de bride (110) présentent respectivement des évidements asymétriques (120, 122) pour la fixation du système d'amortisseur à butée (106, 200, 300, 400, 500).

2. Système de pendule centrifuge (100) selon la revendication 1, **caractérisé en ce que** les évidements (120) de la première partie de bride (108) et les évidements (122) de la seconde partie de bride (110) sont disposés au moins partiellement sans recouvrement en regardant axialement.

3. Système de pendule centrifuge (100) selon au moins une des revendications précédentes, **caractérisé en ce que** les évidements (120) de la première partie de bride (108) et les évidements (122) de la seconde partie de bride (110) se recouvrent partiellement en regardant axialement.

4. Système de pendule centrifuge (100) selon au moins une des revendications précédentes, **caractérisé en ce que** la première partie de bride (108) et la seconde partie de bride (110) sont fabriquées comme pièces identiques.

5. Système de pendule centrifuge (100) selon au moins une des revendications précédentes, **caractérisé en ce que** ladite au moins une partie de butée (124) est réalisée sous forme périphérique fermée ou segmentée.

6. Système de pendule centrifuge (100) selon au moins une des revendications précédentes, **caractérisé en ce que** ladite au moins une partie de fixation (126, 204) présente des premiers prolongements axiaux (130), qui sont logés dans les évidements (120) de la première partie de bride (108), et des seconds prolongements axiaux (132), qui sont logés dans les évidements (122) de la seconde partie de bride (110).

7. Système de pendule centrifuge (100) selon au moins une des revendications précédentes, **caractérisé en ce que** ladite au moins une partie de fixation (126, 204) présente au moins une partie de boucle (128, 206, 208, 304, 404, 502).

8. Système de pendule centrifuge (100) selon au moins une des revendications précédentes, **caractérisé en ce que** ladite au moins une partie de fixation (126, 204) est réalisée sous forme périphérique fermée ou segmentée.

9. Système de pendule centrifuge (100) selon au moins une des revendications précédentes, **caractérisé en ce que** ladite au moins une partie de fixation (126, 204) présente une partie de bride en forme de feuille (504).

10. Système de pendule centrifuge (100) selon au moins une des revendications précédentes, **caractérisé en ce que** le système d'amortisseur à butée (106, 200, 300, 400, 500) est fixé par emboîtement et/ou axialement au moins approximativement sans contrainte entre la première partie de bride (108) et la seconde partie de bride (110).
